Europäisches Patentamt

European Patent Office

Office européen des brevets

(11) Numéro de publication: **0 060 166**
**B1**

## FASCICULE DE BREVET EUROPEEN

(45) Date de publication du fascicule du brevet: **16.01.85**

(21) Numéro de dépôt: **82400292.7**

(22) Date de dépôt: **18.02.82**

(51) Int. Cl.⁴: **H 04 B 3/23**

(54) **Dispositif de commande de convergence pour annuleur d'écho numérique.**

(30) Priorité: **03.03.81 FR 8104199**

(43) Date de publication de la demande:
**15.09.82 Bulletin 82/37**

(45) Mention de la délivrance du brevet:
**16.01.85 Bulletin 85/3**

(84) Etats contractants désignés:
**AT BE CH DE GB IT LI LU NL SE**

(56) Documents cités:
**US - A - 3 821 493**
**US - A - 4 129 753**

**D.L. Duttweiler; IEEE Transactions on Communications, Vol. COM-26 No. 5, mai 1978, p. 647-653,:"A Twelve-Channel Digital Echo Canceller"**

(73) Titulaire: **THOMSON-CSF TELEPHONE, 146, Boulevard de Valmy, F-92707 Colombes (FR)**

(72) Inventeur: **Patte, Philippe, THOMSON-CSF SCPI 173 Bld. Haussmann, F-75360 Paris Cedex 08 (FR)**
Inventeur: **Jeannot, Claude, THOMSON-CSF SCPI 173 Bld. Haussmann, F-75360 Paris Cedex 08 (FR)**

(74) Mandataire: **Chaverneff, Vladimir et al, THOMSON-CSF SCPI 173, Bld Haussmann, F-75379 Paris Cedex 08 (FR)**

ACTORUM AG

## Description

La présente invention se rapporte à un dispositif de commande de convergence pour annuleur d'écho numérique.

On connaît, d'après l'article de Donald L. Duttweiler publié dans «IEEE Transactions on Communications», vol. COM-26 N° 5, de mai 1978, pp. 647 à 653, un annuleur d'écho numérique dans lequel la convergence est obtenue par intercorrélation du signal d'entrée x (k) et du signal d'erreur e (k). Ce document prévoit de faire varier le paramètre K, représentant le gain de boucle d'asservissement des coefficients du filtre numérique de l'annuleur d'écho, et agissant sur le temps de convergence du filtre, au rythme de la variation de puissance du signal d'entrée. Cependant, pour de fortes et rapides variations de puissance du signal d'entrée, on constate que la convergence du filtre n'est pas réalisée dans les meilleures conditions. En outre, le dispositif corrélateur décrit dans ce document est complexe et nécessite un accumulateur de grande capacité en aval du circuit d'élévation au carré.

La présente invention a pour objet un dispositif de commande de convergence pour annuleur d'écho numérique qui soit plus simple que le dispositif connu, qui ait une constante de temps de convergence le plus faible possible, et qui ait un encombrement le plus réduit possible même pour un fonctionnement en temps partagé sur un grand nombre de voies.

Le dispositif de commande de convergence pour annuleur d'écho numérique conforme à l'invention comporte, entre la sortie du soustracteur, relié à la sortie du filtre numérique de l'annuleur d'écho et à la sortie de l'hybride correspondant, et l'entrée de signal d'erreur du corrélateur dudit filtre numérique, un dispositif diviseur dont l'entrée de commande de rapport de division est reliée à la sortie d'un intégrateur quadratique du signal incident de l'annuleur d'écho, cet intégrateur quadratique comportant un dispositif d'élévation au carré.

Selon l'invention, de l'intégrateur quadratique, le dispositif d'élévation au carré est suivi d'un premier circuit de multiplication par un coefficient fixe prédéterminé dont la sortie est reliée à une entrée d'addition d'un additionneur-soustracteur dont la sortie est reliée par une cellule de retard à la sortie de l'intégrateur, la sortie de la cellule de retard étant également reliée, d'une part, directement à une autre entrée d'addition dudit additionneur-soustracteur et, d'autre part, par l'intermédiaire d'un second circuit de multiplication par ledit même coefficient fixe prédéterminé, à l'entrée de soustraction dudit additionneur-soustracteur.

Selon un mode de réalisation préféré de l'invention, dans l'intégrateur quadratique, le dispositif d'élévation au carré et le premier circuit de multiplication sont constitués par une mémoire morte à câblage de sorties décalé, et la cellule de retard et le second circuit de multiplication sont constitués par une mémoire vive à câblage de sorties décalé.

Selon le mode de réalisation préféré de l'invention, ledit dispositif diviseur est constitué par un registre à décalage.

La présente invention sera mieux comprise à l'aide de la description détaillée d'un mode de réalisation pris comme exemple non limitatif et illustrée par le dessin annexé, sur lequel:

la fig. 1 est un bloc-diagramme d'un annuleur d'écho comportant un dispositif de commande de convergence conforme à l'invention, et

la fig. 2 est le bloc-diagramme d'un mode de réalisation préféré d'un dispositif de commande de convergence conforme à l'invention.

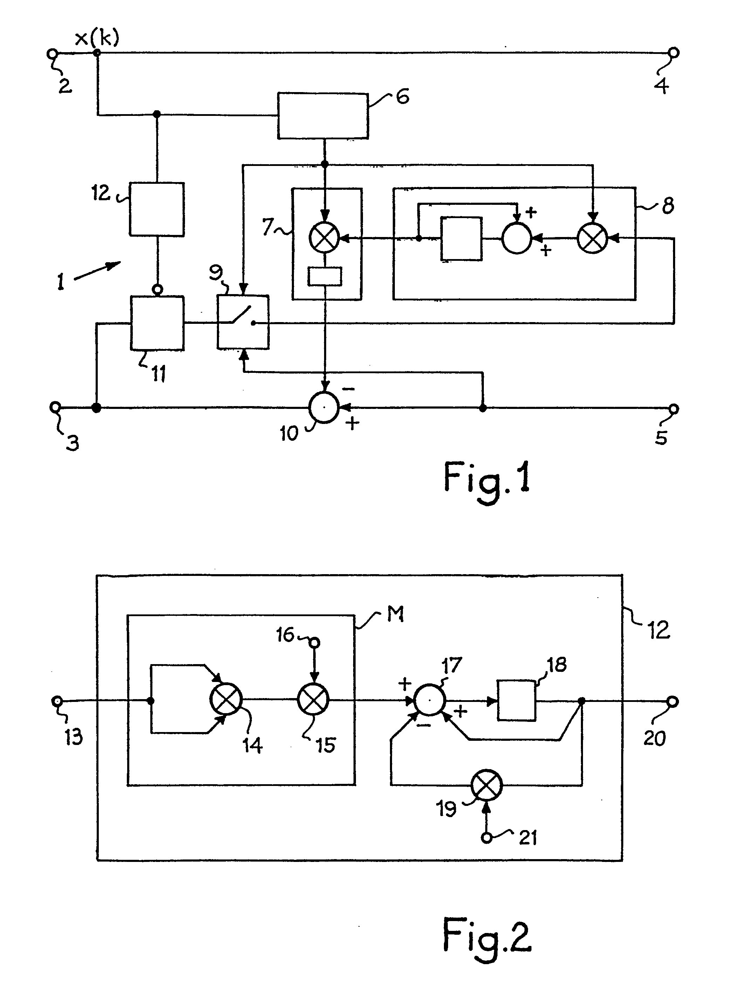

L'annuleur d'écho dont le bloc-diagramme est représenté sur la fig. 1 est du type de celui décrit dans le susdit article de D. L. Duttweiler, avec toutefois quelques modifications, en particulier dans le dispositif de commande du signal d'erreur, modifications qui apparaîtront à la lecture de la description ci-dessous. Un tel annuleur d'écho est disposé, par exemple dans un système de transmission téléphonique, à chaque extrémité du trajet de transmission, juste avant l'hybride 2 fils/4 fils.

L'annuleur d'écho 1 représenté sur la fig. 1 est prévu pour fonctionner en temps partagé sur 32 voies, par exemple, mais, pour simplifier le dessin et les explications, on ne décrira ici que le traitement d'une seule voie, étant entendu que pour un traitement en temps partagé sur plusieurs voies on prévoit des mémoires et des registres de capacité correspondante. L'annuleur d'écho 1 coopère, d'une part, avec un dispositif de transmission de signaux (non représenté), tel qu'un système de transmission par câble ou par satellite associé, le cas échéant, à un autocommutateur et, d'autre part, avec un hybride 2 fils/4 fils (non représenté) auquel est raccordé un abonné dit abonné proche.

Le dispositif de transmission de signaux est relié aux bornes 2 et 3, et l'hybride est relié aux bornes 4 et 5. On suppose que les signaux arrivant sur les bornes 2 à 5 sont déjà sous forme numérique linéaire. Bien entendu, si ces signaux ne sont pas sous forme numérique linéaire, on interpose des transcodeurs appropriés. Le signal arrivant sur la borne 2 depuis un abonné lointain par l'intermédiaire dudit système de transmission sera appelé par la suite signal incident.

La borne 2 est reliée à un dispositif de ligne à retard 6 dans lequel peuvent circuler N échantillons successifs du signal incident, le nombre N définissant l'ordre du filtre numérique à partir duquel est réalisé l'annuleur d'écho 1. Le dispositif 6 est, de préférence, une mémoire vive, cette mémoire étant alors reliée, de façon connue en soi, à un compteur d'adressage (non représenté). La sortie du dispositif 6 est reliée à la fois à un convolueur 7, à une première entrée d'un corrélateur 8, et à un dispositif 9 de détermination de double parole et de commande de circuit de boucle. La sortie du convolueur 7 est reliée à une première entrée d'un soustracteur 10 dont l'autre entrée est reliée à la borne 5. La sortie du soustracteur 10 est reliée à la borne 3 et à l'entrée d'opérande d'un dispositif diviseur 11. La sortie du dispositif diviseur 11 est reliée, par l'intermédiaire du circuit commandé du dispositif 9, à une deuxième entrée du corrélateur 8. La borne 2 est également reliée à l'entrée d'un intégrateur quadratique 12 dont la sortie est reliée à l'entrée de commande de rapport de division du dispositif diviseur 11.

Dans le cas le plus simple, le dispositif 9 comporte, de façon connue en soi et non représentée en détail, un comparateur dont les entrées sont respectivement reliées à la sortie du dispositif 6 et à la borne 5, ce comparateur étant suivi d'un circuit de temporisation d'une durée de temporisation de 2 ms par exemple, ce dernier commandant un interrupteur disposé dans la boucle de signal d'erreur, entre la sortie du dispositif 11 et l'entrée du corrélateur 8.

Le principe de fonctionnement de l'annuleur d'écho est bien connu en soi et ne sera pas décrit ici. On précisera seulement que, à la différence de l'annuleur d'écho connu d'après l'article précité, celui de la présente invention ne fonctionne pas en virgule flottante, car il utilise dans le convolueur un multiplieur à virgule fixe, par exemple le multiplieur-accumulateur TRW Nº TDC 1010J; le dispositif diviseur 11 est un registre à décalage, et l'intégrateur quadratique, décrit ci-dessous en référence à la fig. 2, fonctionne également en virgule fixe.

Dans le cas où le dispositif 6 est, comme précisé ci-dessus, une mémoire vive, le décalage des différents échantillons successifs du signal incident se fait de façon fictive par permutation de l'adressage de cette mémoire, comme indiqué par exemple dans la demande de brevet français FR-A Nº 2469044. Si l'on veut que le filtre numérique de l'annuleur d'écho soit d'ordre élevé, on peut utiliser, pour le dispositif 6, plusieurs mémoires vives branchées en cascade, chacune de ces mémoires vives étant associée à un convolueur et à un corrélateur, comme indiqué par exemple dans la susdite demande de brevet français.

Le dispositif diviseur 11 peut être, comme mentionné ci-dessus, un registre à décalage. Dans ce cas, la division consiste à décaler le contenu de ce registre vers les éléments binaires de poids faible, ce qui revient à diviser ce contenu par une puissance de 2 et ne garder que la partie entière du résultat. Des essais ont montré que le résultat ainsi obtenu était suffisamment précis pour l'application considérée et qu'il n'était pas nécessaire de chercher une meilleure résolution dans la division.

On va maintenant décrire en détail, en référence à la fig. 2, l'intégrateur quadratique 12.

La borne d'entrée 13 de l'intégrateur quadratique 12, reliée extérieurement à la borne 2, est reliée intérieurement à un circuit 14 d'élévation au carré dont la sortie est reliée à une première entrée d'un circuit multiplicateur 15 dont la deuxième entrée est reliée à une borne 16. La borne 16 reçoit un signal représentant un coefficient de multiplication dont la valeur $2^{-c}$, inférieure à 1, est fonction du nombre d'échantillons successifs du signal incident emmagasinés dans le dispositif 6. Selon un mode de réalisation préféré de l'invention, les circuits 14 et 15 sont réalisés à l'aide d'une mémoire morte M, la multiplication par le coefficient $2^{-c}$ se faisant par simple décalage câblé des sorties de cette mémoire, le nombre c étant entier, car des essais ont montré qu'il était suffisant de prendre une valeur entière pour c.

La sortie du circuit 15 est reliée à une entrée d'addition d'un additionneur-soustracteur 17 dont la sortie est reliée à l'entrée d'une cellule à retard 18 reliée à un générateur de signaux d'horloge (non représenté) et fonctionnant en synchronisme avec l'échantillonneur (non représenté), relié en amont de la borne 2, et avec le filtre numérique de l'annuleur d'écho. La sortie de la cellule 18 est reliée, d'une part, directement à une autre entrée d'addition de l'additionneur-soustracteur 17; d'autre part, par l'intermédiaire d'un circuit multiplicateur 19, à une entrée de soustraction de 17, et enfin à une borne 20 qui constitue la borne de sortie du dispositif 12. Le circuit multiplicateur 19 est relié, d'autre part, à une borne 21 qui reçoit le même signal que la borne 16, c'est-à-dire la valeur du coefficient $2^{-c}$. Selon ledit mode de réalisation préféré de l'invention, la cellule 18 est réalisée à l'aide d'une mémoire vive, la multiplication par le coefficient $2^{-c}$ étant également réalisée par décalage câblé des sorties de cette mémoire. La mémoire vive est avantageusement prévue pour fonctionner en temps partagé sur plusieurs voies.

Le coefficient $2^{-c}$ est déterminé expérimentalement pour assurer un compromis entre une intégration sur une période suffisamment longue de l'énergie du signal arrivant sur la borne 2, et une adaptation suffisamment fidèle aux variations de niveau de ce signal. Ainsi, on a trouvé par exemple que, si le filtre numérique (comprenant essentiellement les éléments 6, 7 et 8) est d'ordre 24, la valeur de c est 5; que, si le filtre est d'ordre 128, la valeur de c est 7, et que, si le filtre est d'ordre 256, la valeur de c est 8. Toutefois, on notera que ces valeurs ne sont pas critiques. On notera que le rapport de division du dispositif 11 pourra varier de 1 jusqu'à $2^{-15}$ pour un traitement en 16 éléments binaires, le niveau des signaux de parole variant généralement de $-5$ à $-25$ dBm0. De toute façon, il sera inutile de descendre jusqu'à un niveau d'environ $-45$ dBm0, ce niveau correspondant au bruit des circuits utilisés.

Si on appelle $x_n$, $x_{n+1}$, $x_{n+2}$, ... les différents échantillons successifs du signal incident, le dispositif 12 fournit successivement sur sa sortie 20 les valeurs suivantes, en supposant que le contenu de la cellule 18 est nul à l'arrivée de $x_n$ sur la borne 2:

— à l'arrivée de $x_n$: 0
— à l'arrivée de $x_{n+1}$: $x_n^2 \cdot 2^{-c}$
— à l'arrivée de $x_{n+2}$: $x_n^2 \cdot 2^{-c}(1-2^{-c})+x_{n+1}^2 \cdot 2^{-c}$
— à l'arrivée de $x_{n+3}$: $x_n^2 \cdot 2^{-c}(1-2^{-c})^2+x_{n+1}^2 \cdot 2^{-c}$
$(1-2^{-c})+x_{n+1}^2 \cdot 2^{-c}$, etc.

On voit donc que, au fur et à mesure de l'arrivée de nouveaux échantillons sur la borne 2, la valeur $(x_n^2 \cdot 2^{-c})$, représentative de la puissance instantanée du signal incident à l'arrivée de l'échantillon $x_n$

sur la borne 2, est de plus en plus atténuée, alors que la valeur $(x_n^2 \cdot 2^{-c})$, correspondant aux échantillons de rang m les plus récents, est peu atténuée. En effet, même si le nombre $2^{-c}$ est petit (par exemple ⅓₂ pour un filtre d'ordre 24), l'expression $(1-2^{-c})$ qui multiplie la valeur $(x_n^2 \cdot 2^{-c})$ et qui est élevée à la puissance $(m-1)$ à l'arrivée de l'échantillon $x_{n+m}$, vaut environ 0,5 pour m=23 et environ 0,1 pour m=73 (pour c=5). Par conséquent, à un instant donné, quelques millisecondes après l'arrivée du premier échantillon, le dispositif 12 fournit sur sa borne de sortie 20 un signal représentant l'intégrale actualisée de l'énergie du signal incident. Cette valeur d'énergie est une intégrale actualisée du fait que tous les échantillons du signal incident circulent sans cesse dans la cellule 18 rebouclée sur elle-même, mais sont atténués à chaque tour, les plus anciens étant les plus atténués, et du fait que le résultat tient compte assez rapidement d'une brusque et forte variation du signal incident.

En effet, si à partir d'un premier échantillon et pendant 100 échantillons par exemple (c'est-à-dire pendant 12,5 ms à une fréquence d'échantillonnage de 8 kHz) le niveau du signal incident a une valeur v, la valeur du signal sur la borne 20 tend vers $v^2$, et si brusquement au 101ᵉ échantillon le niveau du signal incident passe à la valeur nv pour s'y maintenir, on recueille sur la borne 20 un signal de valeur $v^2 + ⅓₂(n^2v^2)$ environ à l'arrivée du 102ᵉ échantillon, et la valeur de ce signal tend vers $n^2v^2$ si le niveau du signal incident se maintient à la valeur nv pendant une centaine d'échantillons ou plus. Si le niveau du signal incident revient rapidement (par exemple au bout de quelques échantillons) à la valeur v, la valeur du niveau du signal sur la borne 20 revient rapidement aussi à $v^2$. On a donc bien une intégration du signal incident.

Chaque fois que, dans le signal disponible sur la borne 20, la position de l'élément binaire le plus significatif varie dans un certain sens d'une certaine quantité, on décale en sens inverse et de la même quantité le contenu du registre constituant le diviseur 11, dans les limites de capacité de ce registre.

Des essais ont montré que le temps de convergence de l'annuleur d'écho de la présente invention était d'environ 10, 30 et 40 ms pour un niveau de signal incident de −10, −20 et −30 dBm0 respectivement, l'ordre du filtre numérique étant 24.

## Revendications

1. Dispositif de commande de convergence pour annuleur d'écho numérique comportant, entre la sortie du soustracteur (10) relié à la sortie du filtre numérique (7, 8) de l'annuleur d'écho (1) et à la sortie (5) de l'hybride correspondant, et l'entrée de signal d'erreur du corrélateur (8) dudit filtre numérique, un dispositif diviseur (11) dont l'entrée de commande de rapport de division est reliée à la sortie d'un intégrateur quadratique (12) du signal incident de l'annulateur d'écho, cet intégrateur comportant un dispositif d'élévation au carré (14), caractérisé par le fait que, dans l'intégrateur quadratique, le dispositif d'élévation au carré est suivi d'un premier circuit de multiplication par un coefficient fixe prédéterminé (15) dont la sortie est reliée à une entrée d'addition d'un additionneur-soustracteur (17) dont la sortie est reliée, par une cellule de retard (18), à la sortie de l'intégrateur (20), la sortie de la cellule de retard étant également reliée, d'une part, directement à une autre entrée d'addition dudit additionneur-soustracteur et, d'autre part, par l'intermédiaire d'un second circuit de multiplication (19) par ledit même coefficient fixe prédéterminé, à l'entrée de soustraction dudit additionneur-soustracteur.

2. Dispositif selon la revendication 1, caractérisé par le fait que, dans l'intégrateur quadratique, le dispositif d'élévation au carré et le premier circuit de multiplication sont constitués par une mémoire morte (M) à câblage de sorties décalé, et que la cellule de retard et le second multiplicateur sont constitués par une mémoire vive à câblage de sorties décalé.

3. Dispositif selon l'une des revendications précédentes, caractérisé par le fait que ledit dispositif diviseur est constitué par un registre à décalage.

4. Dispositif selon l'une des revendications précédentes, pour un filtre numérique d'ordre 24, caractérisé par le fait que ledit coefficient fixe prédéterminé est $2^{-5}$.

5. Dispositif selon l'une des revendications 1 à 3, pour un filtre numérique d'ordre 128, caractérisé par le fait que ledit coefficient fixe prédéterminé est $2^{-7}$.

6. Dispositif selon l'une des revendications 1 à 3, pour un filtre numérique d'ordre 256, caractérisé par le fait que ledit coefficient fixe prédéterminé est $2^{-8}$.

## Claims

1. An apparatus for controlling the convergence of a digital echo compensator comprising a dividing device (11) between the output of the substractor (10), which is connected to the output of the digital filter (7, 8) of the echo compensator (1) and to the output (5) of the corresponding hybrid circuit, and the error signal input of the correlator (8) of the digital filter, the quotient control input of the dividing device being connected to the output of a square integrator (12) which receives the incident signal of the echo compensator and which includes a squarer device (14), characterized in that the squarer device is followed in the square integrator by a first multiplier circuit (15) which multiplies by a predetermined constant value and the output of which is connected to an adding input of an adder-subtractor (17), the output of the latter being connected *via* a delay cell (18) to the output of the integrator (20), the delay cell output being moreover, on the one hand, directly connected to a further adding input of said adder-subtractor and, on the other hand, *via* a second multiplier circuit (19) which multiplies by the same predetermined constant value, to the subtracting input of said adder-subtractor.

2. An apparatus according to Claim 1, characterized in that the squarer device and the first multiplier circuit in the square integrator are constituted by a read-only-memory (M) having a shifted wiring of the outputs and that the delay cell and the second multiplier are constituted by a read-write memory having a shifted wiring of the outputs.

3. An apparatus according to one of the preceding claims, characterized in that the dividing device is constituted by a shift register.

4. An apparatus according to one of the preceding claims, applied to a digital filter of the order 24, characterized in that said predetermined constant value is $2^{-5}$.

5. An apparatus according to one of Claims 1 to 3 applied to a digital filter of the order 128, characterized in that said predermined constant value is $2^{-7}$.

6. An apparatus according to one of Claims 1 to 3, applied to a digital filter of the order 256, characterized in that said predetermined constant value is $2^{-8}$.

**Patentansprüche**

1. Vorrichtung zur Konvergenzsteuerung eines digitalen Echokompensators, mit einer Divisionseinrichtung (11), die zwischen den Ausgang des an den Ausgang des Digitalfilters (7, 8) des Echokompensators (1) und an den Ausgang (5) des entsprechenden Hybridschaltkreises angeschlossenen Subtraktionsschaltkreises (10) und den Fehlersignaleingang des Korrelators (8) diese Digitalfilters eingefügt ist und deren Steuereingang für das Teilerverhältnis an den Ausgang eines quadratischen Integrators (12) für das Eingangssignal des Echokompensators angeschlossen ist, wobei dieser Integrator eine Quadriervorrichtung (14) enthält, dadurch gekennzeichnet, dass der Quadriervorrichtung im quadratischen Integrator ein erster Schaltkreis (15) zur Multiplikation mit einem vorgegebenen Festwert nachfolgt, dessen Ausgang an den Addiereingang eines Addiers-Subtrahierers (17) angeschlosen ist, wobei dessen Ausgang über ein Verzögerungsglied (18) mit dem Ausgang des Integrators (20) verbunden ist und der Ausgang des Verzögerungsglieds ausserdem einerseits direkt mit einem anderen Addiereingang des Addieres-Subtrahieres und andererseits über einen zweiten Schaltkreis (19) zur Multiplikation mit demselben vorgegebenen Festwert mit dem Subtraktionseingang des Addierers-Subtrahierers verbunden ist.

2. Vorrichtung nach Anspruch 1, dadurch gekennzeichnet, dass die Quadrievorrichtung und der erste Schaltkreis zur Multiplikation im quadratischen Integrator aus einem Festspeicher (M) mit geshifteter Verdrahtung der Ausgänge besteht und dass das Verzögerungsglied und der zweite Schaltkreis zur Multiplikation von einem Aktivspeicher mit geshifteter Verdrahtung der Ausgänge gebildet wird.

3. Vorrichtung nach einem beliebigen der vorhergehenden Ansprüche, dadurch gekennzeichnet, dass die Divisionseinrichtung aus einem Schieberegister besteht.

4. Vorrichtung nach einem beliebigen der vorhergehenden Ansprüche für ein Digitalfilter der Ordnung 24, dadurch gekennzeichnet, dass der vorgegebene Festwert $2^{-5}$ ist.

5. Vorrichtung nach einem beliebigen der Ansprüche 1 bis 3 für ein Digitalfilter der Ordnung 128, dadurch gekennzeichnet, dass der vorgegebene Festwert $2^{-7}$ ist.

6. Vorrichtung nach einem beliebigen der Ansprüche 1 bis 3 für ein Digitalfilter der Ordnung 256, dadurch gekennzeichnet, dass der vorgegebene Festwert $2^{-8}$ ist.

Fig.1

Fig.2